(19) **Europäisches Patentamt**
**European Patent Office**
**Office européen des brevets**

(11) **EP 4 765 909 A1**

(12) **EUROPEAN PATENT APPLICATION**

(43) Date of publication:
24.06.2026 Bulletin 2026/26

(21) Application number: 26168763.6

(22) Date of filing: 25.03.2025

(51) International Patent Classification (IPC):
H04W 12/04 (2021.01)   H04W 12/041 (2021.01)
H04W 12/0431 (2021.01)   H04W 36/00 (2009.01)
H04W 84/12 (2009.01)   H04W 88/08 (2009.01)
H04W 92/20 (2009.01)

(52) Cooperative Patent Classification (CPC):
H04W 12/04; H04W 12/041; H04W 12/0431;
H04W 36/0038; H04L 2463/061

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 25.03.2024 US 202463569653 P

(62) Document number(s) of the earlier application(s) in
accordance with Art. 76 EPC:
**25719199.9 / 4 758 886**

(71) Applicant: **Cisco Technology, Inc.**
**San Jose, CA 95134-1706 (US)**

(72) Inventors:
• **GUPTA, Binita**
**San Diego, 92127 (US)**
• **ORR, Stephen M.**
**New York, 12589 (US)**
• **HART, Brian D.**
**Sunnyvale, 94087 (US)**

(74) Representative: **Poll, Christopher et al**
**Kilburn & Strode LLP**
**Lacon London**
**84 Theobalds Road**
**London WC1X 8NL (GB)**

Remarks:
This application was filed on 27-03-2026 as a
divisional application to the application mentioned
under INID code 62.

(54) **KEY GENERATION FOR SEAMLESS ROAMING**

(57) A seamless mobility domain (SMD) is described where a PTK for a wireless device is pre-computed or pre-generated before the client roams from a serving AP to a target AP in the SMD. The pre-computed PTK can be distributed (i.e., pushed) to one or more target APs before the wireless device roams, or the PTK can be stored in a key stored and then retrieved from the key store by a target AP once the wireless device roams to the target AP. In another embodiment, the PMK and/or PTK keys are generated using a SMD identifier, such as a SMD MAC address or a special ID for the SMD.

**EP 4 765 909 A1**

**Description**

CROSS-REFERENCE TO RELATED APPLICATIONS

This application claims benefit of co-pending United States provisional patent application Serial No. 63/569,653 filed March 25, 2024. The aforementioned related patent application is herein incorporated by reference in its entirety.

TECHNICAL FIELD

Embodiments presented in this disclosure generally relate to roaming in a seamless mobility domain (SMD) using pre-generated keys.

BACKGROUND

Ultra-high reliability study group (UHR SG) and IEEE 802.11bn (Wi-Fi 8) have discussed roaming enhancements to support more reliable and seamless roaming. To achieve seamless roaming, it is desired to reduce roaming transition time and minimize delays added due to roaming related operations.
With fast transition (FT), a key hierarchy is generated where pairwise master keys (PMK) are generated for each access point (AP) in the mobility domain. That is, a root key (referred to as PMK R0) is created for each station (STA) or client that associates with the mobility domain. PMKs for each AP (i.e., PMK R1's) are then generated from the root key PMK R0. As the STA roams between the APs in the mobility domain, both the STA and APs have to generate new pairwise transient keys (PTKs). This is performed using nonce exchanges between the STA and the new AP, thereby increasing roaming time.

BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.

Figure 1 illustrates pre-generating a PTK in a seamless mobility domain, according to one embodiment.

Figure 2 is a flowchart for pre-generating a PTK in a seamless mobility domain, according to one embodiment.

Figure 3 is a workflow for pre-generating a universal PTK in a seamless mobility domain, according to one embodiment.

Figure 4 is a workflow for pre-generating PTKs for each AP in a seamless mobility domain, according to one embodiment.

Figure 5 is a workflow for generating PMKs and PTKs for each AP in a seamless mobility domain, according to one embodiment.

Figure 6 is a workflow for pre-generating PTKs for each AP in a seamless mobility domain, according to one embodiment.

Figure 7 depicts an example computing device configured to perform various aspects of the present disclosure, according to one embodiment.

To facilitate understanding, identical reference numerals have been used, where possible, to designate identical elements that are common to the figures. It is contemplated that elements disclosed in one embodiment may be beneficially used in other embodiments without specific recitation.

DESCRIPTION OF EXAMPLE EMBODIMENTS

OVERVIEW

One embodiment presented in this disclosure is a network device that includes one or more memories and one or more processors communicatively coupled to the one or more memories, wherein the one or more processors are configured to, individually or collectively, perform operations. The operations include, after a wireless device associates with a first AP in a seamless mobility domain (SMD), generating a pairwise transient key (PTK) for exchanging encrypted content between the wireless device and a second AP in the SMD and, before the wireless device communicates with the second AP, making the PTK available to the second AP.

One embodiment presented in this disclosure is a method that includes associating a wireless device to a first AP in a SMD; generating a PTK for exchanging encrypted content between the wireless device and a second AP in the SMD; and, before the wireless device communicates with the second AP, making the PTK available to the second AP.

One embodiment presented in this disclosure is a network device that includes one or more memories and one or more processors communicatively coupled to the one or more memories, wherein the one or more processors are configured to, individually or collectively, perform operations. The operations include, after, or when, a wireless device associates to an AP in a SMD, generating a PMK for the wireless device and generating a PTK for exchanging encrypted content between the wireless device and the AP based on the PMK. Moreover, at least one of the PMK or the PTK is generated using an identifier for the SMD where the identifier for the SMD can be one of an SMD MAC address or an SMD ID.

EXAMPLE EMBODIMENTS

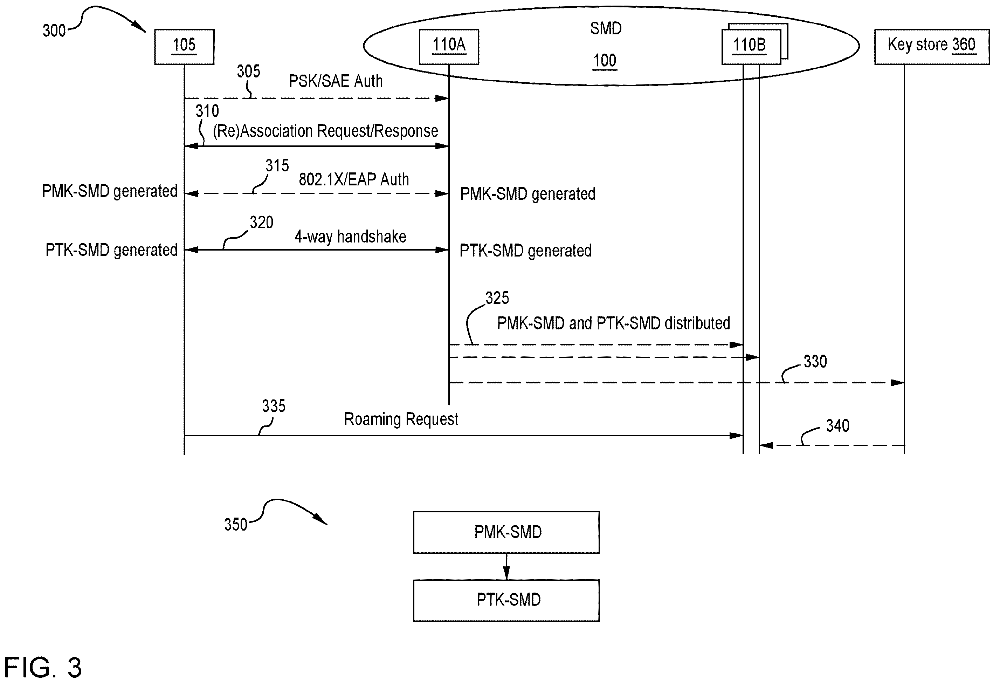

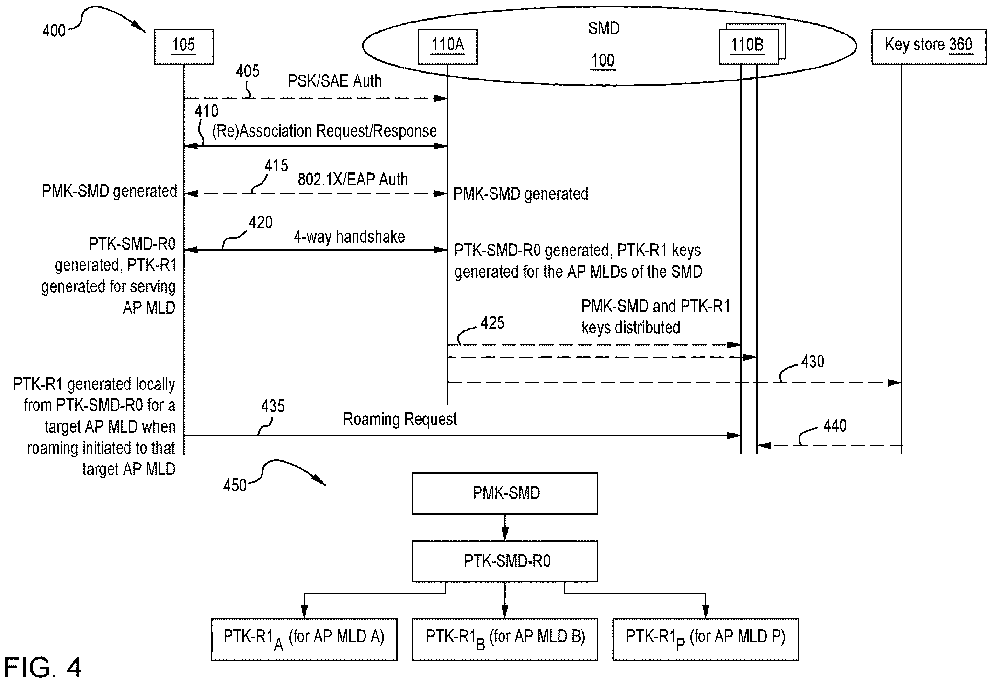

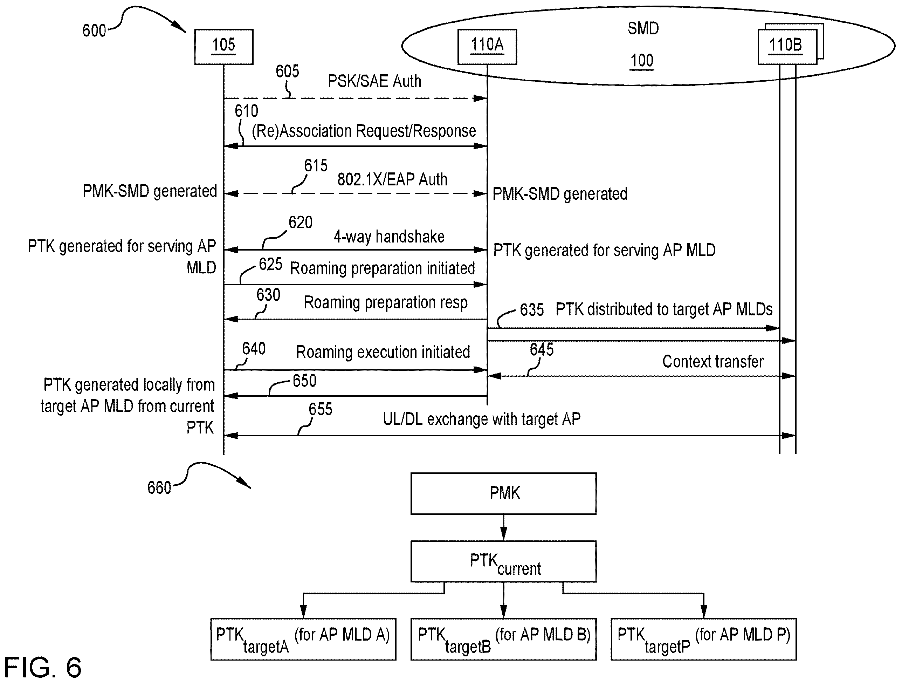

Embodiments herein describe a seamless mobility domain (SMD) where a PTK for a client/STA/non-AP MLD (or more generally, a wireless device) is pre-computed or pre-generated before the client roams from a serving AP to a target AP in the SMD. The pre-computed PTK can be distributed (i.e., pushed) to one or more target APs before the client roams, or the PTK can be stored in a key store and then retrieved from the key store by a target AP once the client initiates a roam to the target AP. In one embodiment, the pre-computed PTK can be the same PTK shared by every AP in the SMD (Figure 3). In other embodiments, the system pre-computes separate PTKs for the APs in the SMD using a root PTK (Figure 4), or by using the PTK generated at the serving AP (Figure 6). By pre-computing the PTK(s), the 4-way handshake typically used to generate a PTK when a client is roaming can be avoided, thereby reducing roaming times. In each of these embodiments, the PTKs can be precomputed without requiring separate nonce exchange between the wireless device and the target AP for PTK generation.

Embodiments herein also include generating PMK and/or PTKs using a SMD identifier (ID). This advantageously ties the PMKs and PTKs to the SMD. The SMD ID can be a SMD MAC address (which may be different from the MAC addresses of the APs in the SMD), a special ID for the SMD (which may be shorter than a MAC address), or is the same as the MAC address of one of the APs in the SMD. The SMD ID can be used as an input to the hashing function that generates the PMK or PTK. Moreover, using a SMD ID to generate a PMK or PTK can be advantageous regardless whether the PTKs are pre-computed before a roam, or computed during a roam.

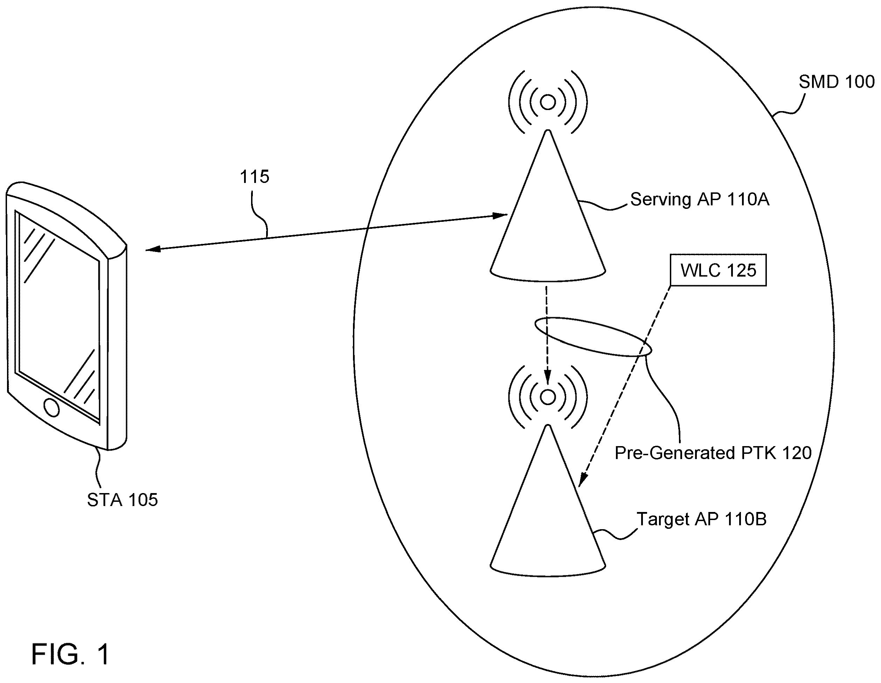

Figure 1 illustrates pre-generating a PTK in a seamless mobility domain, according to one embodiment. In this example, the SMD 100 includes both a serving AP 110A (which the STA 105 is currently associated with) and a target AP 110B where the STA 105 may roam to in the future. While two APs are shown, the SMD 100 can include any number of APs. For example, the APs in a deployment (e.g., a multi-story building, a campus, a warehouse, etc.) may be part of the same SMD 100. In one embodiment, the SMD 100 enables STAs to transition between APs without losing connectivity. The SMD 100 enables a STA to associate once to an AP in the SMD 100 and then roam seamlessly to any other AP in the SMD 100. The SMD 100 can enable services such as key sharing, which is discussed in more detail below, that facilitate a STA to roam seamlessly (i.e., without having to reassociate with the target AP 105B).

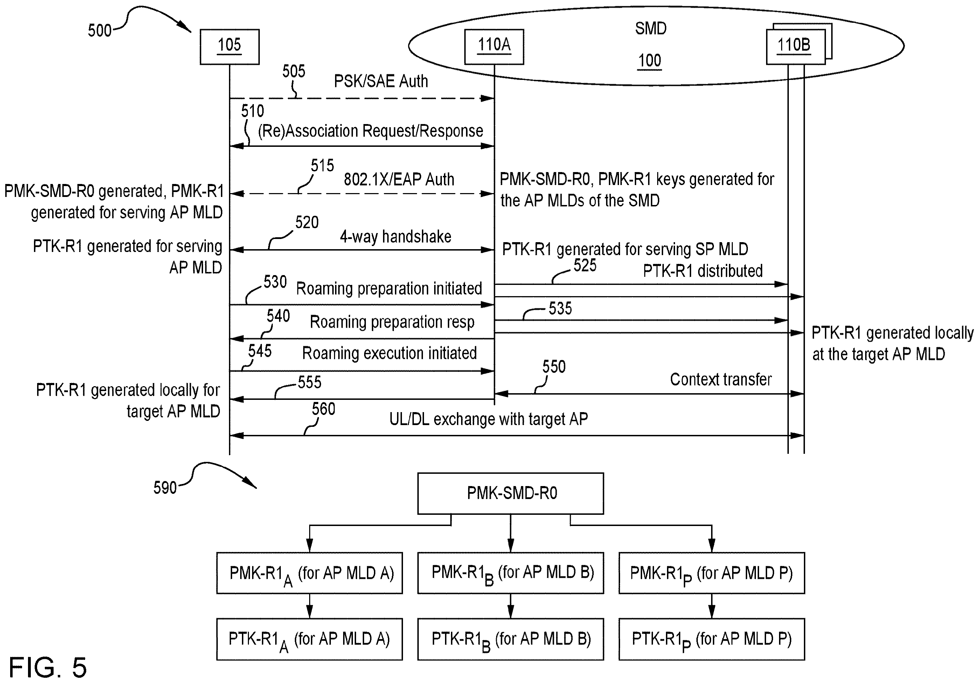

The arrow 115 in Figure 1 illustrates that the STA 105 has initially associated with the serving AP 110A. When a STA 105 first associates to an AP in a SMD 100 (or more generically, a mobility domain) the station is authorized using, e.g., Simultaneous Authentication of Equals (SAE) or Extensible Authentication Protocol (EAP) as defined in IEEE 802.1x, or pre-shared key (PSK). Once authenticated, the SMD generates a PMK from which a PTK can be generated. This PMK and PTK can be used universally in the SMD (e.g., every AP uses the same PMK and PTK as shown in Figure 3), the same PMK is used by every AP but every AP uses a different PTK (as shown in Figure 4), every AP receives a different PMK and PTK (as shown in Figure 5), or a PTK for the serving AP 110A is used to generate a different PTK for each of the APs (as shown in Figure 6).

In the embodiments shown in Figures 3, 4, and 6, the PTKs are pre-generated (i.e., before the STA 105 decides to roam to the target AP 110B), while in Figure 5 the PTKs are generated after (or when) the STA 105 decides to roam to the target AP 110B.

Figure 1 illustrates that a pre-generated PTK 120 can be generated either by the serving AP 110A or a WLAN controller (WLC) 125, as represented by the dashed lines. Further, although not shown in Figure 1, instead of pushing the pre-generated PTK 120 to the target AP 110B (referred to as a push model), the serving AP 110A or WLC 125 may store the pre-generated PTK 120 in a key store which is accessible by the APs in the SMD, and the target AP 110B can pull the PTK 120 from the key store after learning the STA 105 is roaming to the target AP 110B (referred to as a pull model). In either case, the pre-generated PTK 120 has already been generated so that the STA 105 and the target AP 110B do not have to exchange nonces to generate respective PTKs during the roam, thereby reducing roaming latency.

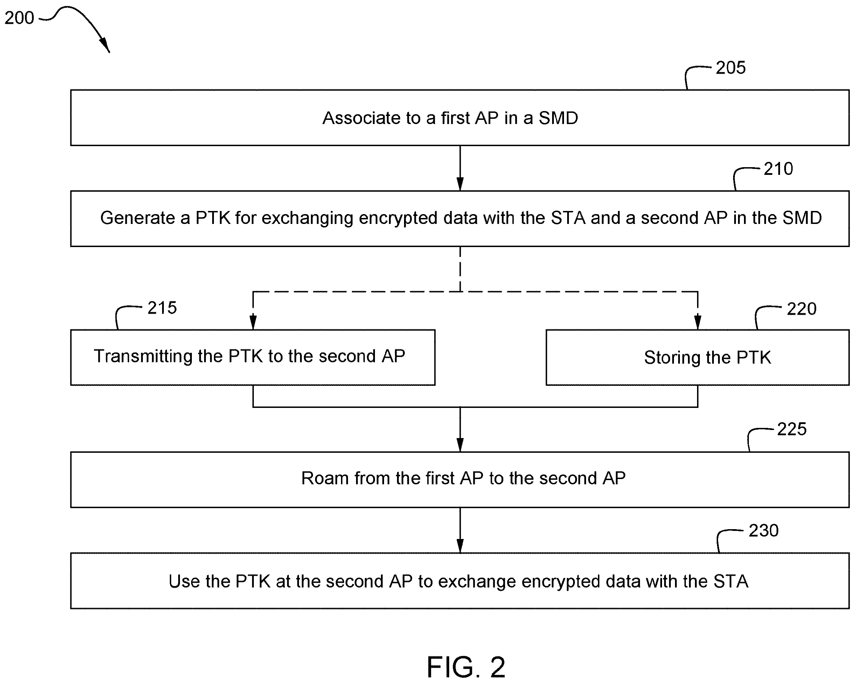

Figure 2 is a flowchart of a method 200 for pre-generating a PTK in a SMD, according to one embodiment. At block 205, a STA (also referred to as a client, a non-AP MLD, or a wireless device) associates to a first AP in a SMD.

At block 210, the SMD generates a PTK for exchanging encrypted content with the STA and a second AP in the SMD. That is, the PTK is generated (or computed) before the STA has roamed to the second AP. For example, the STA may still be associated with the first AP (e.g., the serving AP). As such, at block 210, the PTK is referred to a pre-generated or pre-computed PTK since it is generated for use by the second AP (e.g., the target AP) before the STA has roamed to the second AP.

This pre-generated PTK can be generated by the first AP, or could be generated by a controller in the SMD, such as the WLC 125 in Figure 1. Because the PTK is generated from a PMK, the PMK may be transmitted to whatever actor is tasked with pre-computing the PTK.

While the method 200 describes pre-computing one PTK, the SMD may generate multiple PTKs for multiple target APs. For example, in some embodiments, the SMD pre-computes separate PTKs for a set of potential roaming target APs in the SMD. For instance, the SMD may generate a PTK for each AP in the SMD, or may generate PTKs for a subset of the APs (e.g., only the APs that are neighbors of the first AP currently serving the STA).

After block 210, the method 200 either transmits the PTK to the second AP at block 215 or stores the PTK in a key store at block 220. That is, block 215 is an example of a push model where the pre-computed PTK(s) are pushed to the second AP(s) while block 220 is an example of a pull model where the pre-computed PTK(s) are stored in a key store. When a STA begins to roam to the second AP, the second AP can query the key store to retrieve (i.e., pull) the pre-computed PTK.

At block 225, the STA roams from the first AP to the second AP. The embodiments herein are not limited to any particular seamless roaming process. In one embodiment, the STA can inform the first AP it wishes to roam to the second AP, and the first AP can transfer roaming context to the second AP to perform seamless roaming. This roaming context can include agreements or capabilities, association context, a roaming MAC address (a MAC address used as Transmitter Address (TA) when roaming). In another embodiment, the STA can inform the second AP it wishes to roam to it while the first AP is still the serving AP for the STA (referred to as "roaming through target"). The second AP can then fetch the roaming context from the first AP.

In one embodiment, the transferred context includes the PTK and/or the PMK the second AP can use to communicate securely with the wireless device. That is, the first AP can transfer this information to the second AP (or the second AP can fetch this information from the first AP).

At block 230, the second AP uses the PTK to exchange encrypted content with the STA. The encrypted content can include encrypted data or encrypted management frames. In one embodiment, the second AP does not have to compute the PTK it uses to securely communicate with the STA since the PTK was pre-computed at block 210. The STA 105 can roam without having to reassociate, and without having to renegotiate the PTK (e.g., using a 4-way handshake and an exchange of nonce words).

Figure 3 is a workflow 300 for pre-generating a universal PTK in a SMD 100, according to one embodiment. The workflow 300 illustrates two different ways to perform an initial authentication between the STA 105 and the SMD 100. Arrow 305 illustrates performing PSK/SAE authorization between the STA 105 and the serving (or first) AP 110A, while arrow 315 illustrates performing 802.1X/EAP authorization between the STA 105 and the serving AP 110A. If using PSK/SAE authorization, this is performed before the STA 105 transmits a (re)association request and the serving AP 110A transmits a response as shown by arrow 310. However, if performing 802.1X/EAP authorization, this authorization is performed after the (re)association request/response shown by the arrow 310.

In either case, after authentication, both the STA 105 and the serving AP 110A generate a PMK-SMD. That is, the PMK-SMD is independently generated on both the STA 105 and the serving AP 110. Alternatively, the PMK-SMD can be generated at a WLC.

In one embodiment, the STA 105 and serving AP 110A receive (or generate) a master PMK (MPMK) which they then use to generate the PMK-SMD. For example, the MPMK can be generated from the MSK (for IEEE 802.1X authentication), the PSK (for password-based authentication) or PMK (for SAE based authentication) as defined in 802.11 standard.

In one embodiment, the STA 105 and the serving AP 110A uses a key derivative function (KDF) from IEEE 802.11 to generate the PMK-SMD:

$$\text{Output key} = \text{KDF-}Hash\text{-}Length \text{ (Key, Label, Context)}$$

The KDF can be modified to generate the PMK-SMD as follows:

PMK-SMD = *KDF-Hash-Length*(MPMK, "ST-PMK", SSIDlength ∥ SSID ∥ SMD MAC Address ∥ AP MLD MAC Address ∥ SPA)

KDF-Hash-Length is the KDF for the negotiated AKM (Authentication and Key Management) cipher suite. "Hash" indicates the hash algorithm (e.g. SHA-256). "Length" indicates the length of the hash algorithm's digest (e.g. 192 bits, 256 bits etc.). In the previous equation, the inputs to the KDF hash are the MPMK, the string "ST PMK", service set identifier (SSID) length, a SSID, a MAC Address for the SMD, MAC address for the serving AP 110A, and the SPA (e.g., the MAC address for the STA 105). These inputs are concatenated when input into the hash function.

The "ST-PMK" provides a unique label for PMK-SMD generation, where ST represents "Seamless BSS Transition". Alternatively, this label can be any other appropriate unique string used for this KDF and could be agreed upon in a standard.

The context string includes the SMD MAC Address to tie the PMK-SMD with the SMD. This string also includes the AP MLD MAC address of the AP MLD generating the PMK-SMD. Plus, it includes the SPA, which is the MAC address of the STA 105.

Alternatively, a shortened SMD ID (SMD Identifier) can be included in the PMK-SMD generation as below:

PMK-SMD = KDF-*Hash-Length*(MPMK, "ST-PMK", SSIDlength ∥ SSID ∥ SMDID ∥ AP MLD MAC Address ∥ SPA)

In another embodiment, the PMK-SMD is not tied to any SMD ID and uses same algorithm as defined in 802.11 standard. As such, using a SMD ID to generate the PMK is not a requirement.

In another embodiment, the PMK-SMD may not be tied to the SSID, e.g. this could be the case when the SMD is defined to include APs that belong to more than one extended service set (ESS)/SSID.

In one embodiment, the PTK-SMD is generated as part of the 4-way handshake executed after the (Re) Association Request/Response exchange between the STA 105 and serving AP 110A, during the initial association of the STA with the SMD 100.

Arrow 320 illustrates the STA 105 and the serving AP 110A performing a 4-way handshake to generate the PTK-SMD. In one embodiment, the PTK-SMD is generated from the PMK-SMD as follows:

PTK-SMD = KDF-*Hash-Length*(PMK-SMD, "ST-PTK", SNonce ∥ ANonce ∥ SMD MAC Address ∥ AP MLD MAC Address ∥ SPA)

The "ST-PTK" label can be set to any other appropriate label for the PTK generation.

Alternative, a shortened SMDID (which can be shorter than a MAC address) can be included instead in the PTK-SMD generation as below:

PTK-SMD = *KDF-Hash*-Length(PMK-SMD, "ST-PTK", SNonce ∥ ANonce ∥ SMDID ∥ AP MLD MAC Address ∥ SPA)

In another embodiment, the PTK-SMD only includes the SMD MAC Address, and does not include the MLD MAC Address of the serving AP 110A where the PTK-SMD is generated. This ties the PTK-SMD to only the SMD.

PTK-SMD = KDF-*Hash-Length*(PMK-SMD, "ST-PTK", SNonce ∥ ANonce ∥ SMD MAC Address ∥ SPA)

In one embodiment, the PTK-SMD gets rekeyed using the Robust Security Network Association (RSNA) rekeying procedure. This rekeying may be performed after roaming has occurred.

Arrow 325 illustrates distributing the PMK-SMD and the PTK-SMD to one or more target APs 110B. Arrow 325 represents a push model where the PMK-SMD and the PTK-SMD are pushed to the target APs 110B where they are installed. In this example, this is done at the time of initial association of the STA 105 with the SMD 100, but can be performed when the STA 105 roams to another AP within the SMD 100.

Arrow 330 illustrates a pull model where the PMK-SMD and the PTK-SMD are transmitted and stored in a key store 360. The key store 360 can then provide the PMK-SMD and the PTK-SMD when requested by one of the target APs 110. For example, when STA 105 initiates roaming to another target AP 110B as shown by arrow 335, and if the PMK-SMD and PTK-SMD are not already installed at the target AP 110B, these keys can be fetched from the key store 360 (as shown by arrow 340) and installed. However, with the push model, the PMK-SMD and the PTK-SMD are already installed at the target AP 110B when the roaming request illustrated by the arrow 335 is received.

While Figure 3 illustrates the serving AP 110A making the PTK available to the target AP(s) (e.g., distributing the PMK-SMD and the PTK-SMD to either the target APs 110B or to the key store 360), in another embodiment, the WLC may distribute these keys.

The advantage of both the push and pull models shown in Figure 3 is the target APs 110B do not have to negotiated with the STA 105 to generate PTKs, since the PTK can be pre-computed on both the STA 105 and the target AP 110B. In the pull model, the only latency is the time for the target AP 110B to fetch the pre-computed PMK-SMD and PTK-SMD from the key store 360.

Figure 3 also illustrates a key hierarchy 350. As shown, a PTK-SMD is generated from a PMK-SMD. Each AP in the SMD uses the same PMK-SMD and PTK-SMD to communicate with the STA 105. When a new STA 105 associates with the SMD 100, a new PMK-SMD and PTK-SMD are generated and distributed as discussed above. That is, every STA associated with the SMD has a different PMK-SMD and PTK-SMD which each of the APs in the SMD 100 use to exchange encrypted content with the respective STAs.

Figure 4 is a workflow 400 for pre-generating PTKs for each AP in the SMD 100, according to one embodiment. Like in Figure 3, the workflow 400 in Figure 4 uses the same PMK-SMD. However, unlike in Figure 3, the workflow 400 generates different PTKs for the APs in the SMD 100.

Arrow 405 illustrates performing PSK/SAE authorization between the STA 105 and the serving (or first) AP 110A, while arrow 415 illustrates performing 802.1X/EAP authorization between the STA 105 and the serving AP 110A. If using PSK/SAE authorization, this is performed before the STA 105 transmits a (re)association request and the serving AP 110A transmits a response as shown by arrow 410. However, if performing 802.1X/EAP authorization, this authorization is performed after the (re)association request/response shown by the arrow 410.

In either case, after authentication, both the STA 105 and the serving AP 110A generate a PMK-SMD. That is, the PMK-SMD is independently generated on both the STA 105 and the serving AP 110. Alternatively, the PMK-SMD can be generated at a WLC. The PMK-SMD can be generated using any of the techniques and equations discussed above in Figure 3.

Arrow 420 illustrates the STA 105 and the serving AP 110A performing a 4-way handshake to generate a root PTK (i.e., PTK-SMD-RO) at both the STA 105 and the serving AP 110A. The serving AP 110A (or a WLC) can use the root PTK-SMD-R0 to generate respective PTKs (i.e., PTK-R1 keys) for one or more target APs 110B. That is, the workflow 400 has two levels of PTK-SMD keys: a PTK-SMD-RO and PTK-R1 keys. In one embodiment, the PTK-R0 Key Holder is the AP that generates the PTK-SMD-RO (the serving AP 110A in this example, but could be the WLC). The PTK-R1 Key Holder is the AP that is the holder of that PTK-R1 (e.g., the serving AP 110A).

A single PTK-SMD-RO is generated as below by the PTK-R0 Key Holder. The PTK-SMD-RO can have the same validity/expiry period as the PMK-SMD.

PTK-SMD-RO = KDF-Hash-Length(PMK-SMD, "ST-PTK-R0", SNonce ∥ ANonce ∥ SMD MAC Address ∥ PTK-R0-KH MAC Address ∥ SPA)

where PTK-R0-KH MAC Address is the MAC Address of the AP where the PTK-SMD-RO is generated.

In another embodiment, the PTK-SMD-RO only includes the SMD MAC Address and does not include the MLD MAC Address of the AP where the PTK-SMD-R0 is generated (e.g., the serving AP 110A). This ties the PTK-SMD-RO to only the SMD:

PTK-SMD-RO = KDF-*Hash-Length*(PMK-SMD, "ST-PTK-R0", SNonce ∥ ANonce ∥ SMD MAC Address ∥ SPA)

A set of PTK-R1 keys can be derived from the PTK-SMD-RO by the R0 Key Holder, one for each of the APs of the SMD 100 as follows:

PTK-R1 = KDF-H*ash*-Length(PTK-SMD-R0, "ST-PTK-R1", SMD MAC Address ∥ PTK-R1-KH MAC Address ∥ SPA)

or PTK-R1 = KDF-*Hash-Length*(PTK-SMD-R0, "ST-PTK-R1", PTK-R1-KH MAC Address ∥ SPA)

where PTK-R1-KH MAC Address is the MLD MAC Address of the AP for which the PTK-R1 is generated (holder of the PTK-R1).

The PTK-R1 keys can have shorter expiry period and get rekeyed using the RSNA rekeying procedure.

Each PTK-R1 does not have to be tied to the SMD MAC Address explicitly. Also, the generation of different PTK-R1 keys for each of the APs of the SMD 100 does not require a new set of nonce exchanges between the STA 105 and the corresponding target AP 110B. Once the PTK-R1 keys are generated, these can be installed on the corresponding target APs 110B which are the PTK-R1 Key holders. Moreover, a PTK-R1 can get rekeyed using the existing RSNA rekeying procedure.

Arrow 425 illustrates distributing the PMK-SMD and the PTK-R1 keys to one or more target APs 110B. That is, each target AP 110B gets the same PMK-SMD, but a different PTK-R1 key. Arrow 325 represents a push model where the PMK-SMD and the PTK-R1 keys are pushed to the target APs 110B where they are installed. In this example, this is done at the time of initial association of the STA 105 with the SMD 100, but can be performed when the STA 105 roams to another AP within the SMD 100.

Arrow 430 illustrates a pull model where the PMK-SMD and the PTK-R1 keys are transmitted and stored in a key store 360. The key store 360 can then provide the PMK-SMD and the PTK-R1 keys when requested by one of the target APs 110. For example, when STA 105 initiates roaming to another target AP 110B as shown by arrow 435, and if the PMK-SMD and its corresponding PTK-R1 key are not already installed at the target AP 110B, these keys get fetched from the key store 360 as shown by arrow 440 and installed. However, with the push model, the PMK-SMD and the PTK-R1 keys are already installed at the target AP 110B when the roaming request illustrated by the arrow 435 is received.

While Figure 4 illustrates the serving AP 110A distributing the PMK-SMD and the PTK-R1 keys to either the target APs 110B or to the key store 360, in another embodiment, the WLC may distribute these keys.

Moreover, as shown, the STA 105 still locally generates a PTK-R1 to use when communicating with the target AP 110B but the STA 105 can generate the PTK-R1 without having to do any exchange with the target AP 110B, which means roaming does not need additional exchanges such as the case with FT. The STA 105 can generate the PTK-R1 from the locally generated root PTK-SMD-RO, which was in turn derived from the PMK-SMD. Advantageously, roaming can be performed with two frame exchanges (e.g., a roaming request and a roaming response). Moreover, the STA 105 can generate its PTK-R1 after it determines to roam to the target AP 110B, or can pre-compute its PTK-R1 before the STA 105 decides to roam.

Figure 4 also illustrates a key hierarchy 450. As shown, a root PTK-SMD-R0 is generated from a PMK-SMD. Each AP in the SMD uses a different PTK-R1 (i.e., $PTK-R1_A$, $PTK-R1_B$, etc.) to communicate with the STA 105. When a new STA 105 associates with the SMD 100, a new PMK-SMD, root PTK-SMD-RO, and PTK-R1's are generated and distributed as discussed above. That is, every AP uses a different PTK-R1 to exchange encrypted content with the respective STAs.

Figure 5 is a workflow 500 for generating PMKs and PTKs for each AP in the SMD 100, according to one embodiment. Unlike in Figures 3 and 4, in workflow 500 the PTKs for the APs are not pre-computed, but the PMKs are pre-computed and distributed to the other APs before the STA 105 roams.

Arrow 505 illustrates performing PSK/SAE authorization between the STA 105 and the serving (or first) AP 110A, while arrow 515 illustrates performing 802.1X/EAP authorization between the STA 105 and the serving AP 110A. If using PSK/SAE authorization, this is performed before the STA 105 transmits a (re)association request and the serving AP 110A transmits a response as shown by arrow 510. However, if performing 802.1X/EAP authorization, this authorization is performed after the (re)association request/response shown by the arrow 510.

In either case, after authentication, both the STA 105 and the serving AP 110A generate a root PMK-SMD-R0, and a PMK-R1. The root PMK-SMD-R0 can be generated using the same techniques to generate the PMK-SMD described in Figures 3 and 4.

In addition, the serving AP 110A generates PMK-R1 key(s) for one or more target APs 110B in the SMD 100. That is, unlike in Figures 3 and 4 where the same master PMK (i.e., the PMK-SMD) is used by each AP, here, a different master PMK is generated for each AP in the SMD 100 on a per STA/client basis. The different PMK-R1 keys can be derived from root PMK-SMD-R0 as follows:

PMK-R1 = KDF-*Hash-Length*(PMK-SMD-R0, "ST-PMK-R1", PMK-R1-KH MAC Address ∥ SPA)

where PMK-R1-KH MAC Address is the MLD MAC Address of the AP for which the PMK-R1 is generated (holder of the PMK-R1 which is the serving AP 110A in this example).

Arrow 520 illustrates the STA 105 and serving AP 110A performing a 4-way handshake to generate PTK-R1. The generation of PTK-R1 for the first serving AP 110A where initial (re)association happens may include Nonce values from the two sides (Authenticator and Supplicant) as follows:

PTK-R1 for first AP MLD = KDF-*Hash-Length*(PMK-R1, "ST-PTK-R1", SNonce ∥ ANonce ∥ PTK-R1-KH MAC Address ∥ SPA)

Where PTK-R1-KH MAC Address is the MLD MAC Address of the AP for which the PTK-R1 is generated (holder of the PTK-R1). The STA 105 and the serving AP 110A can then use the PMK-R1 and the PTK-R1 to exchange encrypted content.

Arrow 525 illustrates the serving AP 110A distributing the PMK-R1's to the target APs 110B. For clarity, the key store is not shown in Figure 5, but the PMK-R1's could instead be stored in the key store when using a pull model instead of a push model.

Arrow 530 illustrates the STA 105 instructing the serving AP 110A to initiate roaming preparation. In response, as shown by the arrow 535, the serving AP 110A can inform the target APs 110B that the STA 105 may roam to them. For example, the serving AP 110A can provide information to the target APs 110B about the STA 105 (e.g., the SPA of the STA 105) so the APs 110B can generate the PTK-R1 for communicating with the STA 105.

The target APs 110B use their respective PMK-R1 (and the information received from the serving AP 110A) to locally generate PTK-R1's to communicate with the STA 105. In one embodiment, the target APs 110B derive the PTK-R1s without explicit Nonce exchange with the STA 105. The PTK-R1's can be derived as follows:

$$\text{PTK-R1 for target AP} = \text{KDF-}Hash\text{-}Length(\text{PMK-R1, "ST-PTK-R1", PTK-R1-KH MAC Address} \parallel \text{SPA})$$

Note that given the generation of the subsequent PTK-R1 keys for the target AP can be done without requiring Nonce exchange between the STA 105 and the target APs 110B. The subsequent PTK-R1s can be independently generated by the STA 105 and the target AP 110B. This ensures that different PTKs are used for each target AP 110B without requiring negotiation for generation of a new PTK for the target AP 110B.

Arrow 540 illustrates the serving AP 110A informing the STA 105 that roaming preparation is complete. This informs the STA 105 that the target APs 110B now have PTK-R1's that enable secure communication with the STA 105.

Arrow 545 illustrates the STA 105 informing the serving AP 110A which target AP 110B it wants to roam to. In response, the serving AP 110A can transfer roaming context to the selected target AP 110B as shown by arrow 550. Arrow 555 illustrates the serving AP 110A indicating to the STA 105 that the context transfer is complete. At this time (or before this time), the STA 105 locally generates the PTK-R1 key.

The PMK-R1 and PTK-R1 keys have now been generated and installed at both the STA 105 and the target AP 110B, so secure uplink (UL) and downlink (DL) exchange can occur as shown by arrow 560.

Figure 5 also illustrates a key hierarchy 590 where different PMK and PTK keys are generated for each AP MLD of the SMD. That is, AP MLD A has different PMK and PTK keys for communicating with a STA than AP MLD B, and so forth. This means different PMK-R1 and PTK-R1 keys are generated for each AP MLD of the SMD. A PMK-SMD-R0 is generated at the SMD level.

Figure 6 is a workflow 600 for pre-generating PTKs for each AP in the SMD 100, according to one embodiment. In this example, a single PMK is generated like in Figures 3 and 4, but a different PTK is generated for each AP.

Arrow 605 illustrates performing PSK/SAE authorization between the STA 105 and the serving (or first) AP 110A, while arrow 615 illustrates performing 802.1X/EAP authorization between the STA 105 and the serving AP 110A. If using PSK/SAE authorization, this is performed before the STA 105 transmits a (re)association request and the serving AP 110A transmits a response as shown by arrow 610. However, if performing 802.1X/EAP authorization, this authorization is performed after the (re)association request/response shown by the arrow 610.

In either case, after authentication, both the STA 105 and the serving AP 110A generate a root PMK-SMD. The PMK-SMD can be generated using the same techniques to generate the PMK-SMD described in Figures 3 and 4.

Arrow 620 illustrates the STA 105 and the serving AP 110A performing a 4-way handshake to generate a PTK at both the STA 105 and the serving AP 110A. This initial PTK generated when the STA 105 first associates with the SMD 100 is referred to as PTK$_{current}$ and can be generated as follows:

$$\text{PTK}_{current} = \text{KDF-}Hash\text{-}Length(\text{PMK, "ST-PTK-Current", SNonce} \parallel \text{ANonce} \parallel \text{AP MLD MAC Address} \parallel \text{SPA})$$

Note that PTK$_{current}$ is not tied to a SMD MAC address in this example.

Arrow 625 illustrates the STA 105 instructing the serving AP 110A to initiate roaming preparation. In response, the serving AP generates PTKs for one or more target APs from PTK$_{current}$. For example, the serving AP (or the WLC) uses PTK$_{current}$ to generate a PTK for each target AP (referred to as PTK$_{target}$) using the following equation:

$$\text{PTK}_{target} \text{ (for target AP ML)} = \text{KDF-}Hash\text{-}Length(\text{PTK}_{current}, \text{"ST-PTK-Target", Target AP MLD MAC Address} \parallel \text{SPA})$$

Notably, this calculation of PTK$_{target}$ does not require another nonce exchange.

The PTK(s) for one or more target APs is generated by the current serving AP 110A and distributed/installed on the target APs 110B as part of the roaming procedure as shown by arrow 635. Like above, instead of pushing the PTKs to the target APs 110B, they can instead be stored in a key store (not shown) and then pulled from the key store when a target AP 110B is informed that the STA 105 is roaming to it.

Arrow 640 illustrates the STA 105 informing the serving AP 110A which target AP 110B it wants to roam to. In response, the serving AP 110A can transfer roaming context to the selected target AP 110B as shown by arrow 645. Arrow 650 illustrates the serving AP 110A indicating to the STA 105 that the context transfer is complete. At this time (or before this time), the STA 105 can locally generate the PTK (i.e., the $PTK_{target}$ for the selected target AP 110B).

The $PTK_{target}$ keys have now been generated and installed at both the STA 105 and the target AP 110B, so secure uplink (UL) and downlink (DL) exchange can occur as shown by arrow 655.

Figure 6 also illustrates a key hierarchy 660. A PMK is used to generate the $PTK_{current}$ for the AP the STA 105 initially associates with in the SMD 100. This first AP can then use $PTK_{current}$ to pre-compute different $PTK_{target}$ keys for the target APs in the SMD. That is, AP MLD A has a different $PTK_{target}$ than AP MLD B, and so forth. In this manner, the PTKs for the target APs are derived from the PTK of the initial AP, rather than a PMK.

In any of the embodiments illustrated in Figures 3-6, after roaming is executed and any buffered DL data has been delivered/fetched (or timed out) from the serving AP 110A, an RSNA rekeying operation can be initiated to refresh the PTK (with SNonce and ANonce exchanged between STA and AP) at the new target AP 110B. The PTK rekeying can be initiated either by the new target AP 110B or by the STA 105 using any suitable PTK rekeying mechanism.

Moreover, in any of the key generation algorithms above, the Label string can be changed to any other appropriate string for the key generation.

Note that each of the embodiments above do not require additional negotiation between the STA 105 and the AP for regeneration of keys as part of the roaming execution phase, thus avoiding any key negotiation delay for seamless roaming and providing faster roaming execution.

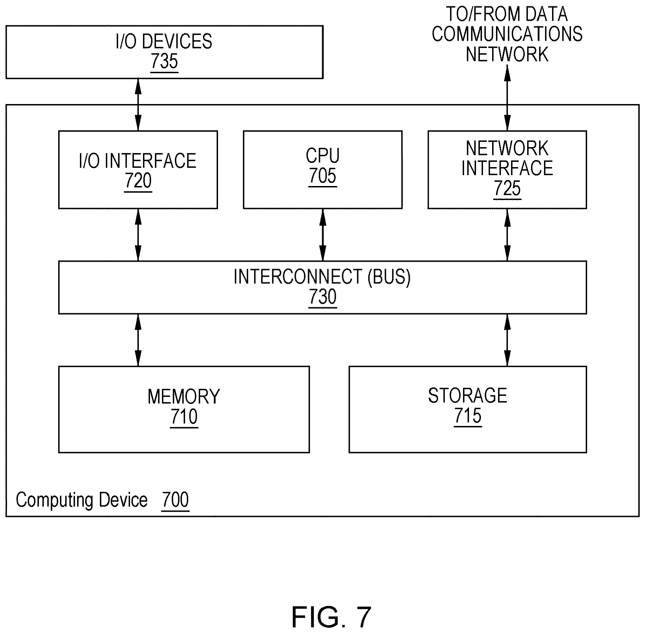

Figure 7 depicts an example computing device configured to perform various aspects of the present disclosure, according to one embodiment. Although depicted as a physical device, in embodiments, the computing device 700 may be implemented using virtual device(s), and/or across a number of devices (e.g., in a cloud environment). In one embodiment, the computing device 700 corresponds to a network device (e.g., a computing system), such as the APs 110 or the STA 105.

As illustrated, the computing device 700 includes a CPU 705 (one or more processors), memory 710 (or memories), storage 715, a network interface 725, and one or more input/output (I/O) interfaces 720. In the illustrated embodiment, the CPU 705 retrieves and executes programming instructions stored in memory 710, as well as stores and retrieves application data residing in storage 715. The CPU 705 is generally representative of a single CPU and/or GPU, multiple CPUs and/or GPUs, a single CPU and/or GPU having multiple processing cores, and the like. The memory 710 is generally included to be representative of a random access memory. Storage 715 may be any combination of disk drives, flash-based storage devices, and the like, and may include fixed and/or removable storage devices, such as fixed disk drives, removable memory cards, caches, optical storage, network attached storage (NAS), or storage area networks (SAN).

In some embodiments, I/O devices 735 (such as keyboards, monitors, etc.) are connected via the I/O interface(s) 720. Further, via the network interface 725, the computing device 700 can be communicatively coupled with one or more other devices and components (e.g., via a network, which may include the Internet, local network(s), and the like). As illustrated, the CPU 705, memory 710, storage 715, network interface(s) 725, and I/O interface(s) 720 are communicatively coupled by one or more buses 730.

The memory 710 can include software programs or application for generating PMKs and PTKs as discussed above in Figures 1-6. Although shown as residing in memory 710, in embodiments, the operations of discussed above (and others not illustrated) may be implemented using hardware, software, or a combination of hardware and software.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," or "at least one of A or B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system."

Furthermore, embodiments may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). As one example, there is provided a computer readable medium carrying instructions which, when executed by one or more processors, causes any of the methods described herein to be carried out.

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In view of the foregoing, the scope of the present disclosure is determined by the claims that follow.

The present application also includes the following numbered clauses:

Clause 1. A network device comprising:

one or more memories; and
one or more processors communicatively coupled to the one or more memories, wherein the one or more processors are configured to, individually or collectively, perform operations comprising, after a wireless device associates with a first AP in a seamless mobility domain (SMD):

generating a pairwise transient key (PTK) for exchanging encrypted content between the wireless device and a second AP in the SMD; and
before the wireless device communicates with the second AP, making the PTK available to the second AP.

Clause 2. The network device of clause 1, wherein the encrypted content includes at least one of encrypted data or encrypted management frames.

Clause 3. The network device of clause 1 or 2, wherein the wireless device uses the same PTK when exchanging encrypted content with the first AP, the second AP, and at least one other AP in the SMD.

Clause 4. The network device of clause 3, the operations further comprising:

before generating the PTK, generating a pairwise master key (PMK) corresponding to the wireless device, wherein the first AP and the second AP use the same PMK for generating the PTK for the wireless device; and making the PMK and the PTK available to multiple APs in the SMD.

Clause 5. The network device of clause 4, the operations further comprising, after making the PTK available to the second AP:

receiving, at the first AP, a roaming request from the wireless device to roam to the second AP; and transferring context associated with the wireless device from the first AP to the second AP wherein the context includes the PTK and the PMK to be used by the second AP for the wireless device.

Clause 6. The network device of clause 4 or 5, the operations further comprising:

generating a root PTK;
generating different PTKs for a plurality of APs in the SMD that includes the first AP and the second AP, wherein the PTK is one of the different PTKs; and
before the wireless device communicates with the plurality of APs, at least one of:

storing the different PTKs in a key store that is accessible by the plurality of APs; or
transmitting the different PTKs to the plurality of APs.

Clause 7. The network device of any preceding clause, the operations further comprising:

generating a first PTK to be used by the first AP to communicate with the wireless device;
generating, based on the first PTK, different PTKs for a plurality of APs in the SMD that include the second AP;
before the wireless device communicates with the plurality of APs, at least one of:

storing the different PTKs in a key store that is accessible by the plurality of APs; or
transmitting the different PTKs to the plurality of APs.

Clause 8. The network device of clause 7, wherein the different PTKs for the plurality of APs including the second AP in the SMD are generated at the first AP without requiring separate nonce exchange between the wireless device and the second AP or the plurality of APs in the SMD.

Clause 9. The network device of any preceding clause, wherein the PTK is generated using an identifier for the SMD, wherein the identifier for the SMD can be one of an SMD MAC address or an SMD ID.

Clause 10. The network device of clause 9, wherein the identifier for the SMD is the SMD MAC address, wherein the SMD MAC address is one of: different from MAC addresses of every AP in the SMD, or is the same as a MAC address of one of the APs in the SMD.

Clause 11. The network device of clause 9, wherein the identifier for the SMD is the SMD ID, which is shorter than a MAC address.

Clause 12. A method comprising:

associating a wireless device to a first access point (AP) in a seamless mobility domain (SMD);
generating a pairwise transient key (PTK) for exchanging encrypted content between the wireless device and a second AP in the SMD; and
before the wireless device communicates with the second AP, making the PTK available to the second AP.

Clause 13. The method of clause 12, wherein the PTK is generated at the first AP without requiring separate nonce exchange between the wireless device and the second AP.

Clause 14. The method of clause 12 or 13, wherein the wireless device uses the same PTK when exchanging encrypted content with the first AP, the second AP, and at least one other AP in the SMD,
the method further comprising:

before generating the PTK, generating a PMK corresponding to the wireless device, wherein the first AP and the second AP use the same PMK for generating the PTK to communicate with the wireless device; and making the PMK and the PTK available to multiple APs in the SMD.

Clause 15. The method of clause 14, further comprising, after making the PTK available to the second AP:

receiving, at the first AP, a roaming request from the wireless device to roam to the second AP; and transferring context associated with the wireless device from the first AP to the second AP wherein the context includes the PTK and the PMK to be used by the second AP for the wireless device.

Clause 16. The method of clause 14 or 15, further comprising:

generating a root PTK;
generating different PTKs for a plurality of APs in the SMD that includes the first AP and the second AP, wherein the PTK is one of the different PTKs; and
before the wireless device communicates with the plurality of APs, at least one of:

storing the different PTKs in a key store that is accessible by the plurality of APs; or
transmitting the different PTKs to the plurality of APs.

Clause 17. A network device comprising:

one or more memories; and
one or more processors communicatively coupled to the one or more memories, wherein the one or more processors are configured to, individually or collectively, perform operations comprising, after, or when, a wireless device associates to an access point (AP) in a seamless mobility domain (SMD):

generating a pairwise master key (PMK) for the wireless device; and
generating a pairwise transient key (PTK) for exchanging encrypted content between the wireless device and the AP based on the PMK,
wherein at least one of the PMK or the PTK is generated using an identifier for the SMD, wherein the identifier for the SMD can be one of an SMD MAC address or an SMD ID.

Clause 18. The network device of clause 17, the operations further comprising:

generating a root PMK;
generating, using the root PMK, different PMKs for a plurality of APs in the SMD; and
before the wireless device communicates with the plurality of APs, at least one of:

storing the different PMKs in a key store that is accessible by the plurality of APs; or
transmitting the different PMKs to the plurality of APs; and

wherein the different PMKs are configured to be used by the plurality of APs to generate different PTKs for the plurality of APs to use for encrypted communication with the wireless device.

Clause 19. The network device of clause 17 or 18, wherein the identifier for the SMD is the SMD MAC address, wherein the SMD MAC address is one of: different from MAC addresses of every AP in the SMD, or is the same as a MAC address of one of the APs in the SMD.

Clause 20. The network device of any of clauses 17 to 19, wherein the identifier for the SMD is the SMD ID, which is shorter than a MAC address.

Clause 21. A method comprising, after, or when, a wireless device associates to an access point (AP) in a seamless mobility domain (SMD):

generating a pairwise master key (PMK) for the wireless device; and

generating a pairwise transient key (PTK) for exchanging encrypted content between the wireless device and the AP based on the PMK,

wherein at least one of the PMK or the PTK is generated using an identifier for the SMD, wherein the identifier for the SMD can be one of an SMD MAC address or an SMD ID.

Clause 22. A computer readable medium carrying instructions which, when executed by one or more processors cause the method of any of clauses 12 to 16 and/or 20 to be carried out.

**Claims**

1. A method comprising

   establishing, by a first access point (AP) multilink device (MLD) of a seamless mobility domain (SMD), an association between the SMD and a non-AP MLD, wherein the SMD comprises the first AP MLD and a second AP MLD;
   wherein establishing the association comprises:
   authenticating the non-AP MLD, the authenticating comprising:

      generating a pairwise master key (PMK) for the SMD and non-AP MLD; and
      generating a pair wise transient key (PTK) for the association between the SMD and the non-AP MLD, wherein the PTK is generated using an identifier for the SMD and a MLD address of the first AP MLD; and

   transmitting the PTK to the second AP MLD in the SMD, wherein the PTK is usable by the second AP MLD to exchange encrypted communications with the non-AP MLD.

2. The method of claim 1, further comprising:

   receiving, by the first AP MLD, an indication that the non-AP MLD desires to roam from the first AP MLD to the second AP MLD; and
   transferring, to the second AP MLD, roaming context indicating a context of the association.

3. The method of claim 1, further comprising:

   receiving, by the first AP MLD, an indication that the non-AP MLD desires to roam from the first AP MLD to the second AP MLD,
   wherein the PTK is transmitted to the second AP MLD in response to the indication that the non-AP MLD desires to roam to the second AP MLD.

4. The method of claim 1, further comprising:

   receiving, by the first AP MLD, an indication that the non-AP MLD desires to roam from the first AP MLD to the second AP MLD; and
   transferring, to the second AP MLD, a roaming context, wherein the PTK is transmitted as part of the roaming context.

5. The method of any preceding claim wherein the identifier for the SMD is in the form of a MAC address.

6. The method of any preceding claim wherein generating the PTK comprises using a key derivation function with the PMK and the identifier for the SMD and the MLD address of the first AP MLD as inputs to the key derivation function; and/or

   wherein the PTK is generated further using a MAC address of the non-AP MLD; and/or
   wherein the PMK is generated using at least one of the identifier for the SMD or a MAC address of the non-AP MLD.

7. An access point (AP) multilink device (MLD) comprising:

one or more memories; and
one or more processors communicatively coupled to the one or more memories, wherein the one or more processors are configured to, individually or collectively, perform operations comprising:

establishing, by the AP MLD, an association between a seamless mobility domain (SMD) and a non-AP MLD, wherein the SMD comprises the AP MLD and a second AP MLD, wherein establishing the association comprises:
authenticating the non-AP MLD, the authenticating comprising:

generating a pairwise master key (PMK) for the SMD and non-AP MLD; and
generating a pair wise transient key (PTK) for the association between the SMD and the non-AP MLD, wherein the PTK is generated using an identifier for the SMD and a MLD address of the AP MLD; and

transmitting the PTK to the second AP MLD in the SMD, wherein the PTK is usable by the second AP MLD to exchange encrypted communications with the non-AP MLD.

8. The AP MLD of claim 7, the operations further comprising:

receiving, by the AP MLD, an indication that the non-AP MLD desires to roam from the AP MLD to the second AP MLD; and
transferring, to the second AP MLD, roaming context indicating a context of the association.

9. The AP MLD of claim 7, the operations further comprising:

receiving, by the AP MLD, an indication that the non-AP MLD desires to roam from the AP MLD to the second AP MLD,
wherein the PTK is transmitted to the second AP MLD in response to the indication that the non-AP MLD desires to roam to the second AP MLD.

10. The AP MLD of claim 7, the operations further comprising:

receiving, by the AP MLD, an indication that the non-AP MLD desires to roam from the AP MLD to the second AP MLD; and
transferring, to the second AP MLD, a roaming context, wherein the PTK is transmitted as part of the roaming context.

11. The AP MLD of any one of claims 7 to 10, wherein the identifier for the SMD is in the form of a MAC address.

12. The AP MLD of any one of claims 7 to 11, wherein generating the PTK comprises using a key derivation function with the PMK and the identifier for the SMD and the MLD address of the AP MLD as inputs to the key derivation function; and/or

wherein the PTK is generated further using a MAC address of the non-AP MLD; and/or
wherein the PMK is generated using at least one of the identifier for the SMD or a MAC address of the non-AP MLD.

13. A non-transitory computer readable storage medium comprising instructions that when executed configure one or more processors of an access point (AP) multi-link device (MLD) to perform operations comprising:

establishing, by the AP MLD, an association between a seamless mobility domain (SMD) and a non-AP MLD, wherein the SMD comprises the AP MLD and a second AP MLD, wherein establishing the association comprises authenticating the non-AP MLD, the authenticating comprising:

generating a pairwise master key (PMK) for the SMD and non-AP MLD; and
generating a pair wise transient key (PTK) for the association between the SMD and the non-AP MLD, wherein the PTK is generated using an identifier for the SMD and a MLD address of the AP MLD; and

transmitting the PTK to the second AP MLD in the SMD, wherein the PTK is usable by the second AP MLD to exchange encrypted communications with the non-AP MLD.

14. The non-transitory computer readable storage medium of claim 13, the operations further comprising:

    receiving, by the AP MLD, an indication that the non-AP MLD desires to roam to the second AP MLD from the AP MLD; and

    transferring, to the second AP MLD, roaming context indicating a context of the association.

15. The non-transitory computer readable storage medium of claim 13 or claim 14 wherein generating the PTK comprises using a key derivation function with the PMK and the identifier for the SMD and the MLD address of the AP MLD as inputs to the key derivation function; and/or

    wherein the PTK is generated further using a MAC address of the non-AP MLD.

FIG. 1

EP 4 765 909 A1

FIG. 2

EP 4 765 909 A1

FIG. 3

FIG. 4

EP 4 765 909 A1

FIG. 5

500

105

SMD 100

110A  110B

505 PSK/SAE Auth

510 (Re)Association Request/Response

515 802.1X/EAP Auth

520 4-way handshake

PMK-SMD-R0 generated, PMK-R1 generated for serving AP MLD

PTK-R1 generated for serving AP MLD

PMK-SMD-R0, PMK-R1 keys generated for the AP MLDs of the SMD

PTK-R1 generated for serving SP MLD

525 PTK-R1 distributed

530 Roaming preparation initiated

535

540 Roaming preparation resp

545 Roaming execution initiated

550 Context transfer

PTK-R1 generated locally for target AP MLD

555 PTK-R1 generated locally at the target AP MLD

560 UL/DL exchange with target AP

590

PMK-SMD-R0

PMK-R1_A (for AP MLD A)

PMK-R1_B (for AP MLD B)

PMK-R1_P (for AP MLD P)

PTK-R1_A (for AP MLD A)

PTK-R1_B (for AP MLD B)

PTK-R1_P (for AP MLD P)

FIG. 6

I/O DEVICES
735

TO/FROM DATA
COMMUNICATIONS
NETWORK

I/O INTERFACE
720

CPU
705

NETWORK
INTERFACE
725

INTERCONNECT (BUS)
730

MEMORY
710

STORAGE
715

Computing Device   700

FIG. 7

Europäisches
Patentamt
European
Patent Office
Office européen
des brevets

# EUROPEAN SEARCH REPORT

**Application Number**

EP 26 16 8763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BINITA GUPTA (CISCO SYSTEMS): "Seamless roaming within a mobility domain", IEEE DRAFT; 11-23-2157-01-00BN-SEAMLESS-ROAMING-WITHIN-A-MOBILITY-DOMAIN IEEE-SA MENTOR, PISCATAWAY, NJ USA, vol. 802.11 UHR; 802.11bn, no. 1, 17 January 2024 (2024-01-17), pages 1-26, XP068275222, [retrieved on 2024-01-17] * slides 7-11 * | 1-15 | INV. H04W12/04 H04W12/041 H04W12/0431 H04W36/00 ADD. H04W84/12 H04W88/08 H04W92/20 |
| A | US 2020/305043 A1 (CHEN LIDAN [CN] ET AL) 24 September 2020 (2020-09-24) * paragraphs 0037, 0054, 0056 * | 1,3,6,9, 12,15 | |
| A | CN 116 156 493 A (HUAWEI TECH CO LTD) 23 May 2023 (2023-05-23) * paragraphs 0040-0043 * | 1,6,12, 15 | |
| A | US 11 924 898 B2 (APPLE INC [US]) 5 March 2024 (2024-03-05) * claim 3; figure 14A * | 6,12,15 | TECHNICAL FIELDS SEARCHED (IPC) H04W H04L |

The present search report has been drawn up for all claims

| Place of search | Date of completion of the search | Examiner |
|---|---|---|
| Munich | 15 April 2026 | Lindner, Jonas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 16 8763

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2026

| Patent document cited in search report | | Publication date | Patent family member(s) | | Publication date |
|---|---|---|---|---|---|
| US 2020305043 | A1 | 24-09-2020 | EP | 3711355 A1 | 23-09-2020 |
| | | | US | 2020305043 A1 | 24-09-2020 |
| | | | US | 2022217603 A1 | 07-07-2022 |
| | | | WO | 2019119444 A1 | 27-06-2019 |
| CN 116156493 | A | 23-05-2023 | CN | 116156493 A | 23-05-2023 |
| | | | EP | 4418711 A1 | 21-08-2024 |
| | | | WO | 2023093277 A1 | 01-06-2023 |
| US 11924898 | B2 | 05-03-2024 | CN | 112449376 A | 05-03-2021 |
| | | | CN | 118945724 A | 12-11-2024 |
| | | | EP | 3790353 A1 | 10-03-2021 |
| | | | EP | 4297522 A2 | 27-12-2023 |
| | | | US | 2021076437 A1 | 11-03-2021 |
| | | | US | 2022201785 A1 | 23-06-2022 |
| | | | US | 2024349374 A1 | 17-10-2024 |

EPO FORM P0459

For more details about this annex : see Official Journal of the European Patent Office, No. 12/82

**EP 4 765 909 A1**

**Patent documents cited in the description**

- US 63569653